# EUROPEAN PATENT SPECIFICATION

(11) **EP 1 133 119 B1**
(45) Date of publication and mention of the grant of the patent: **13.12.2006**
(21) Application number: 01660044.7
(22) Date of filing: 09.03.2001
(51) Int. Cl.: H04L 12/28

(54) **Proximity based service adaption**
Nähezustand basierte Service-Anpassung
Adaptation de service basée sur l'effet de proximité

(30) Priority: 10.03.2000 US 523522
(43) Date of publication of application: 12.09.2001
(73) Proprietor: Nokia Corporation, 02150 Espoo (FI)
(72) Inventor: Esser, Alexander, 02100 Espoo (FI); Wesby, Philip, 02360 Espoo (FI)
(74) Representative: Johansson, Folke Anders

(56) References cited:
- WO-A-98/21911
- WO-A-99/63709

## Description

### BACKGROUND OF THE INVENTION

### Field of the Invention

The present invention is directed to computers and communications , and more particularly, to a proximity based service adaption.

### Description of the Prior Art

Today, computers and mobile (or cellular) phones are typically used for different services. However, with the advent of new high-bandwidth radio technologies (e.g., wideband Code Division Multiple Access or WCDMA, Broadband Radio Access Networks or BRAN, Wireless Application Protocol or WAP), mobile phones will be increasingly capable of providing services such as E-mail provided by the assignee's Extended Messaging Service (EMS).

The user experience for a particular service will nevertheless strongly depend on the terminal used. For many applications, computers will remain preferred since they offer larger screens and keyboards. Mobile phones, on the other hand, excel through their small size and mobility. Personal Digital Assistants (PDAs) are somewhere in between. There is a separation between the capabilities of these terminal types. Each has its own advantages, and neither fully displaces the others. As a result, several terminal types are typically considered as complimentary terminals which will co-exist, see for example WO-A-9 821 911.

To offer users an enhanced user experience, services should preferably adapt according to the terminal(s) which are available to the user. There are several examples. When a user sits at the office or work place, the user may prefer to receive and read E-mail using a computer (e.g., desktop or laptop computer). When the user leaves their work place, the user may want to be notified on the mobile phone when new E-mail has arrived, be informed of who sent the E-mail, and even obtain a copy of the actual E-mail. On the other hand, such a notification or forwarding service is not useful and even annoying if the user sits at the work place. For a messaging service which indicates the user's online presence to other people using the same service (e.g., a "buddy list"), it is desirable that the user does not have to manually select whether he/she is at their computer or not. As an additional example, a computer is usually the preferred device for video calls, but only if the user is close enough to his/her computer at the work place to be able to hear the ringing indicating an incoming call. If the user is away from his/her computer or if the computer is switched off, it may be more desirable to forward the call to the mobile phone (possibly as an audio-only call).

There presently exist several inadequate attempts to provide service adaption. These include the following:
a) Manual activation/deactivation of a service by the user such as manual configuration with Web interface;
b) Registration of a computer for a service (e.g., IP telephony) when a computer is switched on, and deregistration when the computer is shut down;
c) Adaption of the computer to a service according to user activity (e.g., mouse or keyboard use); (note that b and c do not account for the common situation where a user is nearby his computer but not using it)
d) Determination of the relative separation of a user from their laptop computer. Localized service areas in cellular systems {e.g., SOLSA (Support of Localized Service Areas)in GSM} have insufficient spatial accuracy (cell size), and the user's location is determined relative to a fixed location (base station) rather than to their computer which may be mobile; As a result, this technique is not effective either.

SOLSA is a recent addition to the GSM standard which enables tariffing differentiated for different groups of users and to be based on the users location. Users can belong to one or more localized service areas (LSA). Each LSA is defined as one or more radio cells. The network can apply differentiated charging for each LSA. Also, the network can grant users preferential or exclusive access or deny access depending on the LSA.

Therefore, there is a need for an effective technique to adapt or configure a service based on whether a user is close to his computer or not.

### SUMMARY OF THE INVENTION

According to an embodiment, a first user terminal is provided and includes a radio unit to establish a radio link with one or more radio units in other terminals or devices, an interface unit coupled to the radio unit to determine a proximity state of a second user terminal with respect to the first user terminal based on a state of a radio link between the first and second user terminals. The first user terminal also includes a service adaption unit coupled to the interface unit to configure one or more user services based on the proximity state of the second user terminal with respect to the first user terminal.

According to another embodiment, a system is provided for adapting a user service. A user's mobile phone or other mobile terminal is provided that is usually carried with a user. The mobile phone or mobile terminal includes a radio unit to establish a radio link with the radio units of one or more devices or terminals. A user's computer is provided and includes a radio unit to establish a radio link with one or more radio units in other terminals or devices including the user's mobile phone and an interface unit coupled to the computer radio unit to determine a proximity state of the user's mobile phone with respect to the user's computer based on a state of a radio link between the radio units of the computer and the mobile phone. The user's computer also includes a service adaption unit coupled to the interface unit to configure one or more user services based on the proximity state of the mobile phone with respect to the computer.

According to one embodiment, the interface unit determines the proximity state to be a "close" proximity state if a radio link exists between the computer and mobile phone, and determines the proximity state to be a "far" proximity state if the radio link between the computer and mobile phone is non-existent. According to another embodiment, the interface unit determines the proximity state to be a "close" proximity state if dynamically transmitted power of the computer radio unit is less than a threshold value and to be a "far" proximity state if the transmit power is greater than or equal to the threshold value. According to an embodiment, the radio units may be Bluetooth units.

### BRIEF DESCRIPTION OF THE DRAWINGS

The foregoing and a better understanding of the present invention will become apparent from the following detailed description of exemplary embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and is not limited thereto. The scope of the present invention being limited only by the terms of the appended claims.

The following represents brief descriptions of the drawings, wherein:
Fig. 1 is a block diagram illustrating a system according to an example embodiment of the invention.
Fig. 2 is a block diagram illustrating two user terminals according to an example embodiment of the invention.
Fig. 3 is a block diagram illustrating a radio unit according to an example embodiment.
Fig. 4 is a flow chart illustrating a proximity based service adaption according to an example embodiment.

### DESCRIPTION OF THE PREFERRED EMBODIMENTS

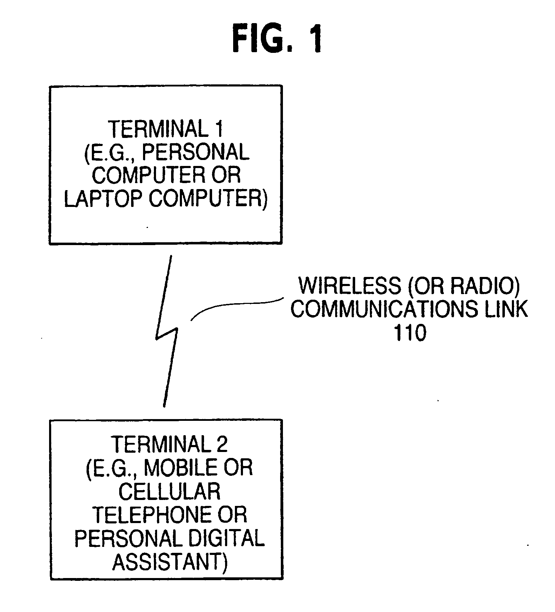

Fig. 1 is a block diagram illustrating a system according to an example embodiment of the invention. A first terminal (terminal 1) is coupled to a second terminal (terminal 2) via a wireless (or radio) communications link 110. Terminal 1 may be for example a personal computer or laptop computer or the like. Terminal 2 may be a mobile or cellular telephone or a PDA or other relatively small or mobile terminal which the user typically carries with him when he is at his work place and when he leaves the work place. Thus, the user would typically carry terminal 2 (such as a mobile phone) with him to go home, to go to a restaurant, to walk to another building, to walk down the hall. According to an embodiment of the invention, either terminal 1 or terminal 2 can detect the proximity or closeness between terminal 1 and terminal 2, and then use this proximity information to configure or adapt one or more user services.

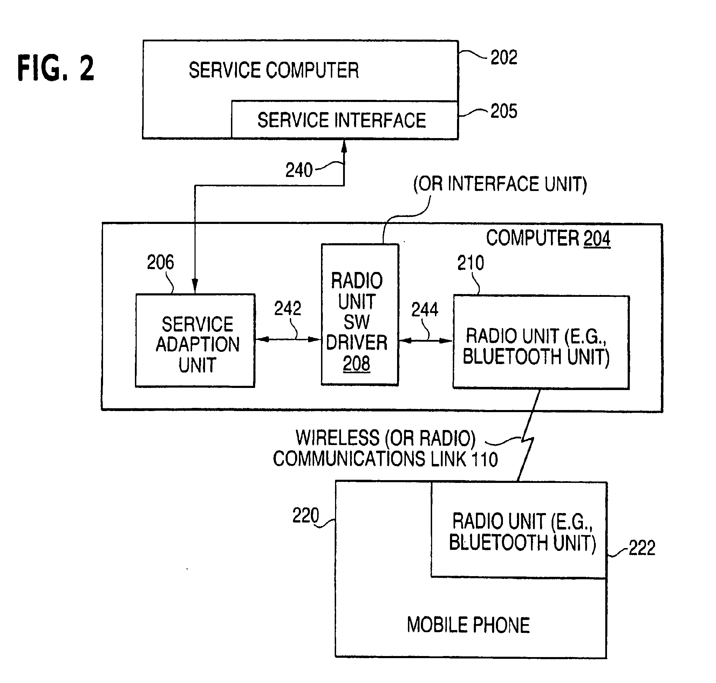

Fig. 2 is a block diagram illustrating two user terminals according to an example embodiment of the invention. A computer 204 is coupled to a mobile phone 220 (or other mobile terminal such as a PDA or the like) via wireless communications link 110. Computer 204 may be a desktop computer, a personal computer (PC), a laptop, or the like. Computer 204 includes a number of standard components found in computers including a processor, main memory, a hard disk drive, a keyboard, one or more additional input/output (I/O) devices and a monitor or display. The computer 204 includes an operating system and typically one or more application programs which can be run or executed. Only a portion of the components or units provided in computer 204 are illustrated in Fig. 2.

As shown in Fig. 2, computer 204 also includes a radio unit for establishing a short-range wireless communications link with another radio unit. In an example embodiment, the radio unit 210 is a Bluetooth unit which may be provided, for example, in accordance with the "Specification of the Bluetooth System, Core," version 1.0B, December 1,1999. This Bluetooth specification and additional information regarding the Bluetooth unit and the Bluetooth Special interest Group can be found, for example, on the world wide web at

The Bluetooth technology is an open specification for wireless communication of data and voice over a short-range radio link. Bluetooth allows for the replacement of proprietary cables that connect one digital device to another with a universal short-range radio link. Mobile computers, cellular handsets or telephones, network access points, printers, PDAs, desktop computers, keyboards, joysticks and other devices can be embedded with Bluetooth radios (or Bluetooth units) to allow for the wireless communication of information between devices. According to an embodiment, a number of features designed into the Bluetooth specification, such as power control and link supervision, can be used to determine the proximity or closeness between the computer 204 and the mobile phone 220 and then configure or adapt one or more user services accordingly. The use of the Bluetooth unit to determine proximity and then configure or adapt a service (as performed by an example embodiment) is not contemplated in the Bluetooth specification.

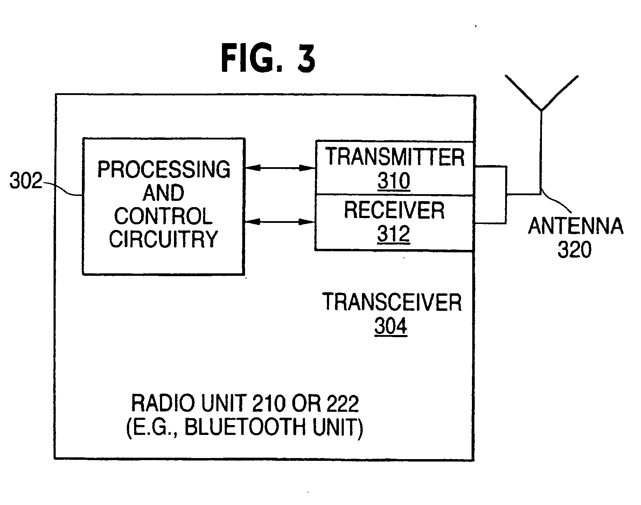

Fig. 3 is a block diagram illustrating a radio unit according to an example embodiment. The radio unit shown in the example embodiment of Fig. 3 includes a transceiver 304, which includes a transmitter 310 for transmitting signals and a receiver for receiving signals. An antenna 320 is provided for receiving and radiating signals to and from the transceiver 304. Processing and control circuitry 302 is provided for controlling the operation of the radio unit, including the transmission of signals. This radio unit in Fig. 3 is provided simply as an example embodiment. A wide variety of radio unit configurations are possible.

The computer 204 includes a radio unit software driver 208 that is coupled to the radio unit 210 via line 244. Software driver 208 provides an interface unit to allow one or more applications running on computer 204 to communicate with radio unit 210 (or Bluetooth unit). (As a result, driver 208 may be referred to generically as an interface unit). The software driver 208 may include an Application Programming Interface (API) that includes a standard set of primitives or commands that applications may use to communicate with the radio unit 210. The API of driver 208 translates the standard commands received from one or more applications to commands or signals compatible with (or understood by) the radio unit 210 (e.g., commands native to the radio unit 210). The driver 208 and the API are provided such that software applications can inquire into the proximity state of a communications link between the radio unit of computer 204 and the radio unit of another terminal (e.g., the proximity of the user's mobile phone 220 with respect to the user's computer 204).

According to one example embodiment, the driver 208 can determine the proximity of the mobile phone 220 to the computer 204 (e.g., a proximity state) based on the radio link supervision functionality already present in the Bluetooth specification/ the Bluetooth unit. According to one embodiment, two proximity states ("close" and "far") are sufficient for use in configuring or adapting a user service (e.g., configure the service in a first state if the proximity state is close, and configure the service in a second state if the proximity state is far). Any number of proximity states can be used, however.

A service adaption unit 206 (e.g., provided as either hardware or a software program) on computer 204 is connected to software driver 208 via line 242. According to an embodiment, service adaption unit 206 is an application program that communicates with the radio unit 210 via the APIs of the software driver 208. The service adaption unit 206 can inquire via line 242 to driver 208 as to the proximity state of any radio unit or any terminal having a radio unit connected thereto. The software driver 208 then communicates with the radio unit 210 via line 244 to determine the proximity of another terminal (e.g., mobile phone 220) to the computer 204 (e.g., to determine the proximity state of another terminal). The proximity state (e.g., "close" or "far") of the other terminal (e.g., mobile phone 220) is then returned or provided from the software driver 208 to the service adaption unit 206 via line 242.

It is unnecessary for the software driver 208 to determine the proximity state continuously because a finite amount of time is required for a user to leave his computer. In many cases, the proximity state can be calculated every few seconds or periodically. In this way, it is possible to preserve the radio units' (the Bluetooth unit's) power saving modes where the radio link is temporarily inactive.

Once the proximity state has been determined, the service adaption unit 206 configures or adapts one or more user services based on the proximity state. The service adaption unit 206 may configure a user's personal services (e.g., E-mail services, IP-telephony services) by updating or writing information, status bits or flags in a service computer 204 via line 240, or even by updating such information within the user's computer 204. This may be done directly to the service or indirectly through a registry or local directory service, etc. Also, a service computer 202 may be connected to computer 204 via a Local Area Network (LAN) or Intranet or via one or more other networks such as the INTERNET for controlling the service and may include a database, a platform or control program for this purpose. As a further example embodiment, the service adaption unit 206 may configure the user's personal services by writing information for the user to a service computer 202 via the service interface 205 (Fig. 2). Service interface 205 may be an API or an interface program.

In one embodiment, the proximity state can be decided to be "close" if a radio link (e.g., a Bluetooth radio link) between the computer 204 and the mobile phone 220 exists (or can be established). The proximity state is considered to be "far" if no connection or radio link exists (or can be established).

Thus, for example, after the software driver 208 receives a proximity inquiry for the mobile phone 220, (or other terminal), the driver 208 may request the radio unit 210 to establish a connection or radio link 110 between the radio units of computer 204 and mobile phone 220 (e.g., if no radio link exists). (The term "connection" here refers to generally establishing a radio path or radio link between the two radio units, and may include either a connectionless link or a connection-oriented link, or other type of link). According to one embodiment, if a connection or radio link cannot be successfully established between radio unit 210 of computer 204 and radio unit 222 of mobile phone 220 (for example), then the proximity state of the mobile phone 220 is considered to be "far." If a wireless connection can be successfully established, the proximity state may be considered to be "close." The software driver 208 may receive only an indication of either a successful or unsuccessful radio link (or connection) establishment, and then reports to the service adaption unit 206 a "close" or "far" proximity state, respectively.

Once a radio link has been established between the two radio units 210 and 222, the software driver can use a link supervision mechanism of radio unit 210 to determine if the radio link has broken down. For example, the Bluetooth unit includes such a link supervision mechanism, and is briefly described in section 10.11 (page 126) of the "Specification of the Bluetooth System, Core," version 1.0B, December 1, 1999.

According to the Bluetooth specification, a connection or radio link between two Bluetooth units may break down for various reasons such as a terminal or device moving out of range or a power failure condition. Since this can occur without any prior warning, it may be important to monitor the link on both the master side (on the side of the computer 204) and the slave side (the side of mobile phone 220). Also according to the Bluetooth specification, to be able to supervise link loss, both the master (e.g., radio unit 210) and slave (e.g., radio unit 222) can use link supervision timers. Upon reception of a packet that passes a header-error-check (HEC) and has a valid or correct address, the radio unit resets or clears the link supervision timer. If at any time during a connection state (existence of a radio link) the link supervision timer reaches a predetermined value, the radio unit resets or terminates the radio link or connection. The termination (or reset) or break down of the radio link is then reported to the software driver 208, and the software driver 208 then reports to the service adaption unit 206 that the proximity state of the other terminal (e.g., the mobile phone) has changed from "close" to "far." The service adaption unit 206 would then re-configure the user's services based on this change in the proximity state.

According to another embodiment, Bluetooth's dynamic power control mechanism can be used to decide between "close" and "far" proximity states in a user-adjustable manner. According to the Bluetooth specification, the radio unit measures the signal strength of the received signal and provides a received signal strength indication (RSSI). If a Bluetooth unit measures a RSSI of a received signal in its receiver that differs too much from a preferred or optimal range of RSSI values, the receiving Bluetooth unit can request the transmitting Bluetooth unit to increase or decrease its transmit power until the received RSSI again falls within its own preferred or optimal range. Power control is briefly described in section 3.18 (pages 215-216) of the "Specification of the Bluetooth System, Core," version 1.0B, December 1, 1999. Thus, with power control between the radio unit 210 (or Bluetooth unit) of computer 204 and radio unit 222 (or Bluetooth unit) of mobile phone 220, the transmit power of the computer's radio unit 210 will be dependent upon the distance between the computer 204 and the mobile phone 220. For example, if the computer 204 and mobile phone are close to each other (e.g., in the same room), the radio units of both the mobile phone and the computer 204 will decrease their transmit power based on requests from the other device to adjust the transmit power. Likewise, if the computer 204 and mobile phone 220 are located relatively far away from each other (e.g., in different buildings), the radio units in both the computer 204 and the mobile phone 220 will adjust their transmit power based on request signals from the other radio unit.

According to an embodiment, the value of the transmit power of the radio unit 210 of computer 204 can be used by the radio unit software driver 208 to determine the proximity state of the mobile phone 220 with respect to the computer 204. According to an embodiment, if the transmit power of radio unit 210 is greater than or equal to a user-adjustable threshold value (or predetermined value), the software driver 208 considers the proximity state to be "far," while if the transmit power of radio unit 210 is less than the threshold value (or predetermined value), the software driver 208 considers the proximity state to be "close." The user can adjust the threshold value (or predetermined value) according to the desired size of the "close" region around the user's computer. The size of the "close" region may also depend upon a particular radio environment.

According to an embodiment, the processing and control circuitry 302 of radio units 210, 222 (Fig. 3) performs the power control functions (e.g., adjusting the transmit power based on instructions from the other radio unit) and the link supervision or link monitoring functions (e.g., providing a link supervision timer, performing the HEC and address check, and then either resetting the timer if the packet is acceptable or terminating the link if the timer reaches the predetermined value).

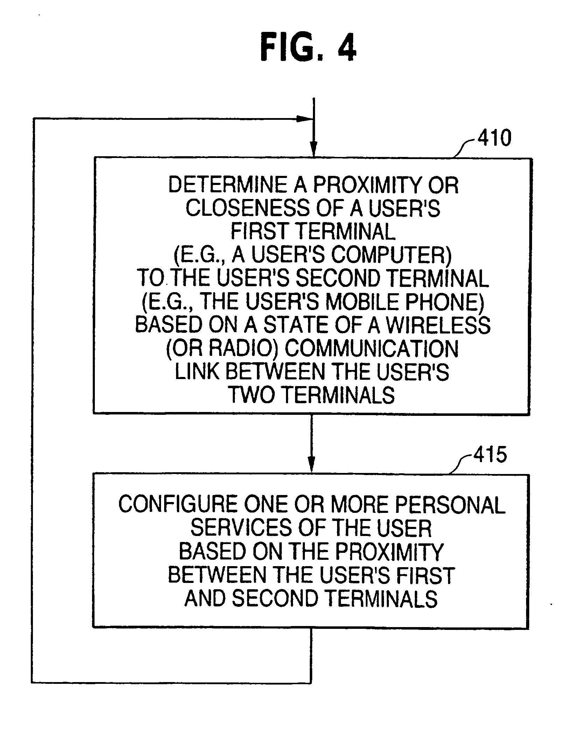

Fig. 4 is a flow chart illustrating a proximity based service adaption according to an example embodiment. At block 410, a proximity or closeness of a user's first terminal (e.g, a user's computer) is determined with respect to the user's second terminal (e.g., the user's mobile phone) based on a state or status of a radio link between the two terminals. According to one embodiment, if a radio link exists between the two terminals the proximity state is "close," and if a radio link does not exist (or cannot be established or has been terminated or reset) then the proximity state of the second terminal with respect to the first is "far." This can be done, for example, using the link supervision functionality provided by a Bluetooth unit or other radio unit. According to another embodiment, the automatic power control feature of a Bluetooth unit (or other radio unit) can be used to determine the proximity state as well.

At block 415 of Fig. 4, one or more user services are configured based on the proximity state determined in block 410.

According to one embodiment, a service is configured (or adapted) to be delivered to a user's computer if the user's mobile terminal (e.g., mobile telephone or PDA) is close to the user's computer or within a predetermined distance or proximity (e.g., a "close" proximity state), while the service is configured (or adapted) to be delivered to the user's mobile terminal if the mobile terminal is not close to the user's computer (e.g., a "far" proximity state).

A wide variety of user services can be configured based on the proximity state of the user's mobile phone with respect to the user's computer. For example, for an E-mail service, the service can be configured to deliver E-mails to the user's computer 204 if the proximity state is "close" and to deliver E-mails to the user's mobile phone 220 (or other mobile terminal) if the proximity state is "far." Alternatively, just a notification that an E-mail has arrived for the user (or other information relating or describing the E-mail, including the sender and the topic, etc.) can be provided to the user's mobile terminal (e.g., user's mobile phone or PDA) only when the proximity state is "far." For telephony, IP-telephony or video-telephony services, these services (i.e., calls to the user) could be delivered or routed to the user's computer 204 if the proximity state is "close" and delivered or routed to the user's mobile phone or other mobile terminal if the proximity state is "far." Also, the user can be automatically registered (e.g., by service adaption unit 206 or other unit) for IP-telephony services only when the proximity state is "close." For a messaging service, the service may be configured to notify other users of the service that the user is at their computer or available to receive messages only when the proximity state is "close," for example. These simply provide a few examples of how a user service can be adapted or configured based on the proximity or closeness of the user's mobile terminal (e.g., mobile phone) to the user's computer.

### The invention has the following additional embodiments:

### Security

A radio transmitter (e.g. bluetooth) may be integrated with a credit card or electronic cash card such that a payment transaction may only be effected when a similar device (for example, worn on the body of the authentic card owner) is within range. This type of service adaption is thus one of payment transaction authorization. If the card is stolen and the pin code of the card be determined, no payment could be effected without the corresponding radio link (e.g. bluetooth) confirmation. The invention provides an additional security layer for E-Commerce type applications. The bluetooth circuitry can control the electronic signature of the card.

### Activity List Generation

In certain situations, a person may arrive back in a place controlled by a bluetooth piconet. One example, without being limiting, is that of a person arriving home. The person then receives a status report about the home, such as a confirmation of which household appliances are working, e.g. the washing machine is on, a spouse will arrive home at 7:00 p.m., options for dinner are grilled fish with vegetables located in the refrigerator, etc., pick up the children from a playgroup before 6:00 p.m.

Essentially the service adaption is that of task allocation as a function of the status of the controlled space and in relation to the tasks that must be performed.

An alternative example is a person arriving at work who receives a status report of who is present and where they are located, which tasks have been allocated, and the current status of those tasks. For example, a person working in inventory management at a supermarket might arrive to be informed of which vehicles were being unloaded, where personnel were working, who was absent, etc.

### Emergency Vehicle Service Adaption

A call sent to a police vehicle may not be received by the officers in the vehicle if no one is present. A bluetooth piconet in the vehicle can determine that no officer is present from the absence of return signal and the call is then redirected to the officer's hand communication device.

### Machine Operation in Factory

To prevent accidents or the unauthorized use of vehicles or machinery, the invention provides a piconet radio link confirmation that the authorized person is present to permit such operation or use of the vehicle.

### Patient Nurse Request System

In a hospital, a patient may request for a nurse to come. If the nurse is momentarily away from the place of attendance, the service adaption forwards the request to a designated reserve person.

### User Notifications from Calendar and Task Management

Conventional calendar and task management applications (e.g. like in Microsoft Outlook) allow user notification at predetermined times.

One application of the present invention is that such event notifications (e.g. about a meeting) are sent to the user's mobile (e.g. via SMS, WAP, etc.) when the event occurs while the user is away from the workplace.

Furthermore, proximity detection enables a service adaption module to determine for how long a user has been away from his computer. This allows a whole new set of services not possible without the present invention.

Another application for calendar and task management is, to notify a user of some event or task-to-do when he returns to his work place but only if he/she has been away from the work place for a certain minimum time.

Several embodiments of the present invention are specifically illustrated and/or described herein. However, it will be appreciated that modifications and variations of the present invention are covered by the above teachings and within the purview of the appended claims without departing from the intended scope of the invention. For example, the example embodiment of Fig. 2 shows that computer 204 includes a driver 208 and a service adaption unit 206 for determining a proximity state and configuring a user service, respectively. In an alternative embodiment, a mobile terminal (such as a mobile phone or PDA) includes a radio unit software driver 208 and service adaption unit 206. In such alternative embodiment, the mobile terminal would thus determine the proximity state and then update or configure the user service in the same manner as described above for computer 204. It is intended that all such modifications fall within the scope of the appended claims.

## Claims

1. A method of adapting a user service comprising the steps of:
determining a proximity of a user's first terminal with respect to a user's second terminal based on a state of a wireless link (110) between the first and second terminals;
configuring a user service based on the proximity.

2. The method of claim 1 wherein the first terminal is a computer (204) and the second terminal is a mobile terminal (220).

3. The method of claim 2 wherein the step of determining comprises the step of attempting to establish a radio link between the computer and the mobile terminal if no radio link exists, the proximity state being a "close" proximity if the radio link is successfully established and being a "far" proximity state if the radio link is not successfully established.

4. The method of claim 2 wherein the step of determining comprises the step of monitoring or supervising a radio link between the user's computer and the user's mobile terminal.

5. The method of claim 4 wherein the step of determining comprises the step of monitoring or supervising a radio link between the computer and the mobile terminal, the proximity state being a "close" proximity if the radio link exists and being a "far" proximity state if the radio link does not exist.

6. The method of claim 5 wherein the step of monitoring or supervising the radio link is performed by using a link supervision timer.

7. The method of claim 6 wherein the step of monitoring or supervising the radio link is performed by resetting the link supervision timer if a received packet passes a header error check and contains a valid address, the radio link being reset or terminated if the link supervision timer reaches a predetermined value and the proximity state being changed to "far" if the link is terminated or reset.

8. The method of claim 2 wherein the step of determining comprises the step of determining a proximity state of a user's computer with respect to a user's mobile terminal based on the transmit power from either the computer or the mobile terminal.

9. The method of claim 2 wherein the step of determining comprises the steps of:
determining if a transmit power of the user's computer is greater than a threshold value;
setting the proximity state to a "close" proximity state if the transmit power is less than the threshold value, and setting the proximity state to a "far" proximity state if the transmit power is greater than or equal to the threshold value.

10. The method of claim 9 and further comprising the step of setting a threshold value to establish a selected size of a "close" region around the computer.

11. The method of claim 2 wherein the step of determining a proximity state is performed periodically.

12. The method of claim 2 wherein the step of determining is repeated, the method further comprising a step of reconfiguring the user service if the proximity state has changed.

13. The method of claim 2 wherein the step of determining comprises the step of determining a proximity state of a user's computer with respect to a user's mobile terminal based on a state of a radio link between the computer and the mobile terminal, the proximity state being either a "close" proximity or a "far" proximity.

14. The method of claim 13 wherein the step of configuring a user service comprises the step of configuring a user service to deliver the service to the user's computer if the proximity state is a "close" proximity state and to deliver at least a portion of the service to the mobile terminal if the proximity state is a "far" proximity state.

15. The method of claim 13 wherein the step of configuring a user service comprises configuring an E-mail service to provide at least some information regarding E-mails which have arrived to the user's mobile terminal if the proximity state is a "far" proximity state.

16. The method of claim 13 wherein the step of configuring a user service comprises configuring an E-mail service to provide a notice of arrived E-mails to the user's mobile terminal if the proximity state is a "far" proximity state.

17. The method of claim 13 wherein the step of configuring a user service comprises configuring an E-mail service to provide arrived E-mails to the user's mobile terminal if the proximity state is a "far" proximity state.

18. The method of claim 13 wherein the step of configuring comprises the step of configuring a telephony service to route a telephony call to the user's computer if the proximity state is a "close" proximity state and configuring the telephony service to route a telephone call to the user's mobile terminal if the proximity state is a "far" proximity state.

19. The method of claim 19 wherein the telephony call comprises an IP-telephony call.

20. The method of claim 13 wherein the step of configuring comprises the step of configuring a messaging service to notify other users of the service that the user is at their computer or available to receive messages when the proximity state is a "close" proximity state.

21. A first user terminal comprising:
a radio unit (210) to establish a radio link with one or more radio units in other terminals or devices;
an interface unit (208) coupled to the radio unit to determine a proximity state of a second user terminal with respect to the first user terminal based on a state of a radio link between the first and second user terminals; and
a service adaption unit (206) coupled to the interface unit to configure one or more user services based on the proximity state of the second user terminal with respect to the first user terminal.

22. The first user terminal of claim 21 wherein the first user terminal comprises a computer.

23. The first user terminal of claim 21 wherein the first user terminal comprises a mobile phone or other mobile terminal usually carried with a user.

24. The first user terminal of claim 23 wherein the second user terminal comprises a computer.

25. The first user terminal of claim 21 wherein the interface unit comprises a software driver coupled to the radio unit and the service adaption unit.

26. The first user terminal of claim 21 wherein the interface unit comprises an interface unit coupled to the radio unit to determine a proximity state of a second user terminal with respect to the first user terminal based on a state of a radio link between the first and second user terminals, the proximity state being either a "close" proximity state or a "far" proximity state.

27. The first user terminal of claim 26 wherein the radio unit includes processing and control circuitry for supervising or monitoring the radio link between the first and second user terminals and reporting a link failure or link termination to the interface unit.

28. The first user terminal of claim 27 wherein the interface unit interprets an existing radio link between the first and second user terminals as a "close" proximity and the non-existence of a radio link as a "far" proximity.

29. The first user terminal of claim 26 wherein the radio unit includes processing and control circuitry to increase or decrease transmit power of the radio unit based on requests from a radio unit of the second user terminal, the interface unit interpreting a transmit power of the radio unit of the first user terminal that is less than a threshold value as a "close" proximity and interpreting a transmit power of the first user terminal radio unit that is greater than or equal to the threshold value as a "far" proximity.

30. The first user terminal of claim 26 wherein the adaption unit comprises an adaption unit that configures a user service to deliver the service to the first user terminal if the proximity state is a "close" proximity state and to deliver at least a portion of the service to the second user terminal if the proximity state is a "far" proximity state.

31. The first user terminal of claim 21 wherein the radio unit comprises a Bluetooth unit.

32. The first user terminal of claim 21 wherein the radio unit comprises a Bluetooth unit that is embedded within the first user terminal.

33. A system for adapting a user service comprising:
a user's mobile phone (220), the mobile phone including a radio unit to establish a radio link with the radio units of one or more devices or terminals; and
a user's computer (204) the computer including:
a radio unit (210) establish a radio link with one or more radio units in other terminals or devices including the user's mobile phone;
an interface unit (208) coupled to the computer radio unit to determine a proximity state of the mobile phone with respect to the computer based on a state of a radio link between the radio units of the computer and the mobile phone; and
a service adaption unit (206) coupled to the interface unit to configure one or more user services based on the proximity state of the mobile phone with respect to the computer.

## Patentansprüche

1. Verfahren zum Anpassen eines Benutzerdienstes, folgende Schritte umfassend:
Bestimmen der Entfernung eines ersten Endgeräts des Benutzers relativ zu einem zweiten Endgerät des Benutzers auf Basis eines Zustands einer drahtlosen Verbindung (110) und zwischen dem ersten und zweiten Endgerät,
Konfigurieren eines Benutzerdienstes auf Basis der Entfernung.

2. Verfahren nach Anspruch 1, wobei das erste Endgerät ein Computer (204) ist und das zweite Endgerät ein mobiles Endgerät (220) ist.

3. Verfahren nach Anspruch 2, wobei der Schritt des Bestimmens den Schritt des Versuchens umfasst, eine Funkverbindung zwischen dem Computer und dem mobilen Endgerät aufzubauen, wenn keine Funkverbindung besteht, und wobei der Entfernungszustand eine "nahe" Entfernung ist, wenn die Funkverbindung erfolgreich aufgebaut wird, und eine "weite" Entfernung ist, wenn die Funkverbindung nicht erfolgreich aufgebaut wird.

4. Verfahren nach Anspruch 2, wobei der Schritt des Bestimmens den Schritt des Überwachens oder Betreuens einer Funkverbindung zwischen dem Computer des Benutzers und dem mobilen Endgerät des Benutzers umfasst.

5. Verfahren nach Anspruch 4, wobei der Schritt des Bestimmens den Schritt des Überwachens oder Betreuens einer Funkverbindung zwischen dem Computer des Benutzers und dem mobilen Endgerät des Benutzers umfasst und wobei der Entfernungszustand eine "nahe" Entfernung ist, wenn die Funkverbindung besteht, und eine "weite" Entfernung ist, wenn die Funkverbindung nicht besteht.

6. Verfahren nach Anspruch 5, wobei der Schritt des Überwachens oder Betreuens der Funkverbindung unter Verwendung eines Zeitgebers für Verbindungsbetreuung durchgeführt wird.

7. Verfahren nach Anspruch 6, wobei der Schritt des Überwachens oder Betreuens der Funkverbindung durch Zurücksetzen des Zeitgebers für Verbindungsbetreuung durchgeführt wird, wenn ein empfangenes Paket eine Überprüfung auf Header-Fehler besteht und eine gültige Adresse enthält, wobei die Funkverbindung zurückgesetzt oder beendet wird, wenn der Zeitgeber für Verbindungsbetreuung einen vorgegebenen Wert erreicht und wobei der Entfernungszustand auf "weit" geändert wird, wenn die Verbindung beendet oder zurückgesetzt wird.

8. Verfahren nach Anspruch 2, wobei der Schritt des Bestimmens den Schritt des Bestimmens eines Entfernungszustands eines Computers eines Benutzers relativ zu einem mobilen Endgerät des Benutzers auf Basis der Sendeleistung entweder von dem Computer oder dem mobilen Endgerät umfasst.

9. Verfahren nach Anspruch 2, wobei der Schritt des Bestimmens folgende Schritte umfasst:
Bestimmen, ob eine Sendeleistung des Computers des Benutzers größer ist als ein Grenzwert,
Setzen des Entfernungszustands auf einen "nahen" Entfernungszustand, wenn die Sendeleistung geringer ist als der Grenzwert, und Setzen des Entfernungszustands auf einen "weiten" Entfernungszustand, wenn die Sendeleistung größer oder gleich dem Grenzwert ist.

10. Verfahren nach Anspruch 9, ferner umfassend den Schritt des Setzens eines Grenzwertes, um eine ausgewählte Größe eines "nahen" Bereichs um den Computer festzulegen.

11. Verfahren nach Anspruch 2, wobei der Schritt des Bestimmens eines Entfernungszustands periodisch durchgeführt wird.

12. Verfahren nach Anspruch 2, wobei der Schritt des Bestimmens wiederholt wird, das Verfahren ferner umfassend einen Schritt des Neukonfigurierens des Benutzerdienstes, wenn sich der Entfernungszustand geändert hat.

13. Verfahren nach Anspruch 2, wobei der Schritt des Bestimmens den Schritt des Bestimmens eines Entfernungszustands eines Computers eines Benutzers relativ zu einem mobilen Endgerät des Benutzers auf Basis eines Zustands einer Funkverbindung zwischen dem Computer und dem mobilen Endgerät umfasst, wobei der Entfernungszustand entweder eine "nahe" Entfernung oder eine "weite" Entfernung ist.

14. Verfahren nach Anspruch 13, wobei der Schritt des Konfigurierens eines Benutzerdienstes den Schritt des Konfigurierens eines Benutzerdienstes umfasst, um den Dienst an den Computer des Benutzers zu liefern, wenn der Entfernungszustand ein "naher" Entfernungszustand ist, und um mindestens einen Teil des Dienstes an das mobile Endgerät zu liefern, wenn der Entfernungszustand ein "weiter" Entfernungszustand ist.

15. Verfahren nach Anspruch 13, wobei der Schritt des Konfigurierens eines Benutzerdienstes das Konfigurieren eines E-Mail-Dienstes umfasst, um mindestens einige Informationen in Bezug auf E-Mails bereitzustellen, die an dem mobilen Endgerät des Benutzers angekommen sind, wenn der Entfernungszustand ein "weiter" Entfernungszustand ist.

16. Verfahren nach Anspruch 13, wobei der Schritt des Konfigurierens eines Benutzerdienstes das Konfigurieren eines E-Mail-Dienstes umfasst, um eine Benachrichtigung über an dem mobilen Endgerät des Benutzers angekommene E-Mails bereitzustellen, wenn der Entfernungszustand ein "weiter" Entfernungszustand ist.

17. Verfahren nach Anspruch 13, wobei der Schritt des Konfigurierens eines Benutzerdienstes das Konfigurieren eines E-Mail-Dienstes umfasst, um an dem mobilen Endgerät des Benutzers angekommene E-Mails bereitzustellen, wenn der Entfernungszustand ein "weiter" Entfernungszustand ist.

18. Verfahren nach Anspruch 13, wobei der Schritt des Konfigurierens den Schritt des Konfigurierens eines Telefondienstes an den Computer des Benutzers umfasst, wenn der Entfernungszustand ein "naher" Entfernungszustand ist, und des Konfigurierens des Telefondienstes, um einen Telefonanruf an dem mobilen Endgerät des Benutzers zu routen, wenn der Entfernungszustand ein "weiter" Entfernungszustand ist.

19. Verfahren nach Anspruch 19, wobei der Telefonanruf einen IP-Telefonanruf umfasst.

20. Verfahren nach Anspruch 13, wobei der Schritt des Konfigurierens den Schritt des Konfigurierens eines Nachrichtendienstes umfasst, um andere Benutzer des Dienstes darüber zu benachrichtigen, dass der Benutzer an ihrem Computer ist oder verfügbar ist, Nachrichten zu empfangen, wenn der Entfernungszustand ein "naher" Entfernungszustand ist.

21. Erstes Benutzerendgerät, umfassend:
eine Funkeinheit (210), um eine Funkverbindung mit einer oder mehreren Funkeinheiten in anderen Endgeräten oder Vorrichtungen aufzubauen,
eine Schnittstelleneinheit (208) gekoppelt mit der Funkeinheit, um einen Entfernungszustand eines zweiten Benutzerendgeräts relativ zu dem ersten Benutzerendgerät auf Basis eines Zustands einer Funkverbindung zwischen dem ersten und zweiten Benutzerendgerät zu bestimmen, und
eine Dienstanpassungseinheit (206) gekoppelt mit der Schnittstelle, um einen oder mehrere Benutzerdienste auf Basis des Entfernungszustands des zweiten Benutzerendgeräts relativ zu dem ersten Benutzerendgerät zu konfigurieren.

22. Erstes Benutzerendgerät nach Anspruch 21, wobei das erste Benutzerendgerät einen Computer umfasst.

23. Erstes Benutzerendgerät nach Anspruch 21, wobei das erste Benutzerendgerät ein Mobiltelefon oder ein anderes mobiles Endgerät umfasst, dass der Benutzer normalerweise bei sich trägt.

24. Erstes Benutzerendgerät nach Anspruch 23, wobei das zweite Benutzerendgerät einen Computer umfasst.

25. Erstes Benutzerendgerät nach Anspruch 21, wobei die Schnittstelleneinheit einen Softwaretreiber umfasst, der mit der Funkeinheit und der Dienstanpassungseinheit gekoppelt ist.

26. Erstes Benutzerendgerät nach Anspruch 21, wobei die Schnittstelleneinheit eine Schnittstelleneinheit umfasst, die mit der Funkeinheit gekoppelt ist, um einen Entfernungszustand eines zweiten Benutzerendgeräts relativ zu dem ersten Benutzerendgerät auf Basis eine Zustands einer Funkverbindung zwischen dem ersten und zweiten Benutzerendgerät zu bestimmen, wobei der Entfernungszustand entweder ein "naher" oder ein "weiter" Entfernungszustand ist.

27. Erstes Benutzerendgerät nach Anspruch 26, wobei die Funkeinheit Verarbeitungs- und Steuerschaltung zur Betreuung oder Überwachung der Funkverbindung zwischen dem ersten und zweiten Benutzerendgerät und zur Meldung eines Verbindungsfehlers oder einer Verbindungsbeendigung an die Schnittstelleneinheit umfasst.

28. Erstes Benutzerendgerät nach Anspruch 27, wobei die Schnittstelleneinheit eine bestehende Funkverbindung zwischen dem ersten und zweiten Benutzerendgerät als eine "nahe" Entfernung interpretiert und das Nichtvorhandensein einer Funkverbindung als "weite" Entfernung interpretiert.

29. Erstes Benutzerendgerät nach Anspruch 26, wobei die Funkeinheit Verarbeitungs- und Steuerungsschaltung zur Erhöhung und Verringerung der Sendeleistung der Funkeinheit auf Basis von Anforderungen von einer Funkeinheit des zweiten Benutzerendgeräts umfasst, wobei die Schnittstelleneinheit eine Sendeleistung der Funkeinheit des ersten Benutzerendgeräts, die geringer ist als ein Grenzwert, als eine "nahe" Entfernung interpretiert und eine Sendeleistung des ersten Benutzerendgeräts, die größer oder gleich dem Grenzwert ist, als eine "weite" Entfernung interpretiert.

30. Erstes Benutzerendgerät nach Anspruch 26, wobei die Anpassungseinheit eine Anpassungseinheit umfasst, die einen Benutzerdienst konfiguriert, um den Dienst an ein erstes Benutzerendgerät zu liefern, wenn der Entfernungszustand ein "naher" Entfernungszustand ist, und um mindestens eine Teil des Dienstes an das zweite Benutzerendgerät zu liefern, wenn der Entfernungszustand ein "weiter" Entfernungszustand ist.

31. Erstes Benutzerendgerät nach Anspruch 21, wobei die Funkeinheit eine Bluetooth-Einheit umfasst.

32. Erstes Benutzerendgerät nach Anspruch 21, wobei die Funkeinheit eine Bluetooth-Einheit umfasst, die in das erste Benutzerendgerät eingebettet ist.

33. System zur Anpassung eines Benutzerdienstes, umfassend:
ein Mobiltelefon (220) eines Benutzers, das Mobiltelefon umfassend eine Funkeinheit, um eine Funkverbindung mit den Funkeinheiten einer oder mehrerer Vorrichtungen oder Endgeräte aufzubauen, und
einen Computer (204) eines Benutzers, der Computer umfassend:
eine Funkeinheit (210), um eine Funkverbindung mit einer oder mehreren Funkeinheiten in anderen Endgeräten oder Vorrichtungen einschließlich des Mobiltelefons des Benutzers aufzubauen,
eine Schnittstelleneinheit (208) gekoppelt mit der Funkeinheit des Computers, um einen Entfernungszustand des Mobiltelefons relativ zu dem Computer auf Basis eines Zustands einer Funkverbindung zwischen den Funkeinheiten des Computers und dem Mobiltelefon zu bestimmen, und
eine Dienstanpassungseinheit (206) gekoppelt mit der Schnittstelle, um einen oder mehrere Benutzerdienste auf Basis des Entfernungszustands des Mobiltelefons relativ zu dem Computer zu konfigurieren.

## Revendications

1. Procédé d'adaptation d'un service d'utilisateur comprenant les étapes consistant à :
déterminer une proximité d'un premier terminal d'utilisateur par rapport à un second terminal d'utilisateur sur la base d'un état d'une liaison sans fil (110) entre les premier et second terminaux,
configurer un service d'utilisateur sur la base de la proximité.

2. Procédé selon la revendication 1, dans lequel le premier terminal est un ordinateur (204) et le second terminal est un terminal mobile (220).

3. Procédé selon la revendication 2, dans lequel l'étape de détermination comprend l'étape consistant à tenter d'établir une liaison radio entre l'ordinateur et le terminal mobile si aucune liaison radio n'existe, l'état de proximité étant une proximité "proche" si la liaison radio est établie avec succès et étant un état de proximité "éloignée" si la liaison radio n'est pas établie avec succès.

4. Procédé selon la revendication 2, dans lequel l'étape de détermination comprend l'étape consistant à surveiller ou superviser une liaison radio entre l'ordinateur de l'utilisateur et le terminal mobile de l'utilisateur.

5. Procédé selon la revendication 4, dans lequel l'étape de détermination comprend l'étape consistant à surveiller ou superviser une liaison radio entre l'ordinateur et le terminal mobile, l'état de proximité étant une proximité "proche" si la liaison radio existe et étant un état de proximité "éloignée" si la liaison radio n'existe pas.

6. Procédé selon la revendication 5, dans lequel l'étape consistant à surveiller ou superviser la liaison radio est exécutée, en utilisant un temporisateur de supervision de liaison.

7. Procédé selon la revendication 6, dans lequel l'étape consistant à surveiller ou superviser la liaison radio est exécutée en réinitialisant le temporisateur de supervision si un paquet reçu passe un contrôle d'erreur d'en-tête et contient une adresse valide, la liaison radio étant réinitialisée ou achevée si le temporisateur de supervision de liaison atteint une valeur prédéterminée et l'état de proximité étant passé à "éloignée" s'il est mis fin à la liaison ou si elle est réinitialisée.

8. Procédé selon la revendication 2, dans lequel l'étape de détermination comprend l'étape consistant à déterminer un état de proximité d'un ordinateur d'utilisateur par rapport à un terminal mobile d'utilisateur sur la base de la puissance d'émission soit de l'ordinateur soit du terminal mobile.

9. Procédé selon la revendication 2, dans lequel l'étape de détermination comprend les étapes consistant à :
déterminer si une puissance d'émission de l'ordinateur de l'utilisateur est plus grande qu'une valeur de seuil,
établie l'état de proximité à un état de proximité "proche" si la puissance d'émission est inférieure à la valeur de seuil, et établir l'état de proximité à un état de proximité "éloignée" si la puissance d'émission est supérieure ou égale à la valeur de seuil.

10. Procédé selon la revendication 9, comprenant en outre l'étape consistant à établir une valeur de seuil pour établir une taille sélectionnée d'une région "proche" autour de l'ordinateur.

11. Procédé selon la revendication 2, dans lequel l'étape de détermination d'un état de proximité est exécutée périodiquement.

12. Procédé selon la revendication 2, dans lequel l'étape de détermination est répétée, le procédé comprenant en outre une étape consistant à reconfigurer le service d'utilisateur si l'état de proximité a changé.

13. Procédé selon la revendication 2, dans lequel l'étape de détermination comprend l'étape consistant à déterminer un état de proximité d'un ordinateur d'utilisateur par rapport à un terminal mobile d'utilisateur sur la base d'un état d'une liaison radio entre l'ordinateur et le terminal mobile, l'état de proximité étant soit une proximité "proche" soit une proximité "éloignée".

14. Procédé selon la revendication 13, dans lequel l'étape de configuration d'un service d'utilisateur comprend l'étape consistant à configurer un service d'utilisateur pour délivrer le service à l'ordinateur de l'utilisateur si l'état de proximité est un état de proximité "proche" et à délivrer au moins une partie du service au terminal mobile si l'état de proximité est un état de proximité "éloignée".

15. Procédé selon la revendication 13, dans lequel l'étape de configuration d'un service d'utilisateur comprend la configuration d'un service de courrier électronique afin de procurer au moins certaines informations concernant les courriers électroniques qui sont arrivés au terminal mobile de l'utilisateur si l'état de proximité est un état de proximité "éloignée".

16. Procédé selon la revendication 13, dans lequel l'étape de configuration d'un service d'utilisateur comprend la configuration d'un service de courrier électronique pour procurer une notification de courriers électroniques arrivés au terminal mobile de l'utilisateur si l'état de proximité est un état de proximité "éloignée".

17. Procédé selon la revendication 13, dans lequel l'étape de configuration d'un service d'utilisateur comprend la configuration d'un service de courrier électronique pour procurer des courriers électroniques arrivés au terminal mobile d'utilisateur si l'état de proximité est un état de proximité "éloignée".

18. Procédé selon la revendication 13, dans lequel l'étape de configuration comprend l'étape consistant à configurer un service téléphonique pour acheminer un appel téléphonique à l'ordinateur de l'utilisateur si l'état de proximité est un état de proximité "proche" et à configurer le service téléphonique pour acheminer un appel téléphonique au terminal mobile de l'utilisateur si l'état de proximité est un état de proximité "éloignée".

19. Procédé selon la revendication 13, dans lequel l'appel téléphonique comprend un appel téléphonique à protocole IP.

20. Procédé selon la revendication 13, dans lequel l'étape de configuration comprend l'étape consistant à configurer un service de messagerie pour notifier aux autres utilisateurs du service que l'utilisateur est à son ordinateur ou disponible pour recevoir des messages lorsque l'état de proximité est un état de proximité "proche".

21. Premier terminal d'utilisateur comprenant :
une unité radio (210) destinée à établir une liaison radio avec une ou plusieurs unités radio dans d'autres terminaux ou dispositifs,
une unité d'interface (208) reliée à l'unité radio pour déterminer un état de proximité d'un second terminal d'utilisateur par rapport au premier terminal d'utilisateur sur la base d'un état d'une liaison radio entre les premier et second terminaux d'utilisateur, et
une unité d'adaptation de service (206) reliée à l'unité d'interface pour configurer un ou plusieurs services d'utilisateur sur la base de l'état de proximité du second terminal d'utilisateur par rapport au premier terminal d'utilisateur.

22. Premier terminal d'utilisateur selon la revendication 21, dans lequel le premier terminal d'utilisateur comprend un ordinateur.

23. Premier terminal d'utilisateur selon la revendication 21, dans lequel le premier terminal d'utilisateur comprend un téléphone mobile ou un autre terminal mobile habituellement porté par l'utilisateur.

24. Premier terminal d'utilisateur selon la revendication 23, dans lequel le second terminal d'utilisateur comprend un ordinateur.

25. Premier terminal d'utilisateur selon la revendication 21, dans lequel l'unité d'interface comprend un pilote logiciel couplé à l'unité radio et à l'unité d'adaptation de service.

26. Premier terminal d'utilisateur selon la revendication 21, dans lequel l'unité d'interface comprend une unité d'interface reliée à l'unité radio pour déterminer un état de proximité d'un second terminal d'utilisateur par rapport au premier terminal d'utilisateur sur la base d'un état d'une liaison radio entre les premier et second terminaux d'utilisateur, l'état de proximité étant soit un état de proximité "proche" soit un état de proximité "éloignée".

27. Premier terminal d'utilisateur selon la revendication 26, dans lequel l'unité radio comprend les circuits de traitement et de commande destinés à superviser ou surveiller la liaison radio entre les premier et second terminaux d'utilisateur et à signaler une défaillance de liaison ou l'interruption d'une liaison à l'unité d'interface.

28. Premier terminal d'utilisateur selon la revendication 27, dans lequel l'unité d'interface interprète une liaison radio existante entre les premier et second terminaux d'utilisateur comme étant une proximité "proche" et la non-existence d'une liaison radio comme étant une proximité "éloignée".

29. Premier terminal d'utilisateur selon la revendication 26, dans lequel l'unité radio comprend des circuits de traitement et de commande destinés à augmenter ou diminuer la puissance d'émission de l'unité radio sur la base de demandes provenant de l'unité radio du second terminal d'utilisateur, l'unité d'interface interprétant une puissance d'émission de l'unité radio du premier terminal d'utilisateur qui est inférieure à une valeur de seuil comme étant une proximité "proche" et interprétant une puissance d'émission de la première unité radio de terminal d'utilisateur qui est supérieure ou égale à la valeur de seuil comme étant une proximité "éloignée".

30. Premier terminal d'utilisateur selon la revendication 26, dans lequel l'unité d'adaptation comprend une unité d'adaptation qui configure un service d'utilisateur pour délivrer le service au premier terminal d'utilisateur si l'état de proximité est un état de proximité "proche" et pour délivrer au moins une partie du service au second terminal d'utilisateur si l'état de proximité est un état de proximité "éloignée".

31. Premier terminal d'utilisateur selon la revendication 21, dans lequel l'unité radio comprend une unité Bluetooth.

32. Premier terminal d'utilisateur selon la revendication 21, dans lequel l'unité radio comprend une unité Bluetooth qui est incorporée au sein du premier terminal d'utilisateur.

33. Système destiné à adapter un service d'utilisateur comprenant :
un téléphone mobile d'utilisateur (220), le téléphone mobile comprenant une unité radio pour établir une liaison radio avec les unités radio d'un ou plusieurs dispositifs ou terminaux, et
un ordinateur d'utilisateur (204), l'ordinateur comprenant :
une unité radio (210) pour établir une liaison radio avec une ou plusieurs unités radio dans d'autres terminaux ou dispositifs, y compris le téléphone mobile de l'utilisateur,
une unité d'interface (208) reliée à l'unité radio d'ordinateur destinée à déterminer un état de proximité du téléphone mobile par rapport à l'ordinateur sur la base d'un état d'une liaison radio entre les unités radio de l'ordinateur et du téléphone mobile, et
une unité d'adaptation de service (206) reliée à l'unité d'interface destinée à configurer un ou plusieurs services d'utilisateur sur la base de l'état de proximité du téléphone mobile par rapport à l'ordinateur.
